# DEMANDE DE BREVET EUROPEEN

(11) **EP 4 390 701 A1**
(43) Date de publication de la demande: **26.06.2024**
(21) Numéro de dépôt: 23218560.3
(22) Date de dépôt: 20.12.2023
(51) Int. Cl.: G06F 11/30, G06F 9/50, G06F 11/32

(54) **DISPOSITIF DE SUPERVISION CONFIGURÉ POUR COMMUNIQUER AVEC UN DISPOSITIF DE CALCUL PÉRIPHÉRIQUE EMBARQUÉ À BORD D'UN AÉRONEF ET SYSTÈME ÉLECTRONIQUE D'EXÉCUTION D'APPLICATIONS LOGICIELLES ASSOCIÉ**

(30) Priorité: 22.12.2022 FR 2214318
(71) Demandeur: THALES, 92190 Meudon (FR)
(72) Inventeur: RAZE, Sébastien, 33700 Merignac (FR); COULMEAU, François, 31000 Toulouse (FR); CAPELLE, Bruno, 33700 Merignac (FR); LE ROUX, Yannick, 33700 Merignac (FR); MARIANI, Pierre, 33700 Merignac (FR)
(74) Mandataire: Lavoix

(57) **Abrégé**

Ce dispositif de supervision est configuré pour communiquer avec un dispositif calcul périphérique embarqué à bord d'un aéronef, ledit dispositif périphérique embarqué étant configuré pour exécuter des applications logicielles en lien avec un ou plusieurs dispositifs électroniques de bord à fonctionnement certifié, le dispositif de supervision comportant une interface homme-machine et étant configuré pour recevoir, dudit dispositif de calcul périphérique, des signaux d'observabilité comprenant des données relatives à des ressources calculatoires locales du dispositif de calcul périphérique embarqué et des informations relatives à l'exécution d'au moins une desdites applications logicielles, le dispositif de supervision (82) comportant au moins un processeur de calcul configuré pour calculer (90) un état de fonctionnement dudit dispositif de calcul périphérique et un état d'exécution de ladite au moins une application logicielle à partir des signaux d'observabilité reçus et afficher (92) ledit état de fonctionnement et ledit état d'exécution sur ladite interface homme machine.

## Description

La présente invention concerne un dispositif de supervision configuré pour communiquer avec un dispositif calcul périphérique embarqué à bord d'un aéronef, ainsi qu'un système électronique d'exécution d'applications logicielles associé.

L'invention se situe dans le domaine de l'avionique, et plus particulièrement dans le domaine de l'exécution d'applications logicielles embarquées sur un aéronef.

L'invention s'applique pour tout type d'aéronef, avec ou sans pilote à bord, à la fois dans un contexte civil ou militaire.

De manière connue, les aéronefs comportent des dispositifs électroniques de bord (ou ordinateurs de bord) à fonctionnement certifié selon une norme de certification avionique. En particulier, toute application logicielle embarquée dans ce type de dispositif doit être conforme et certifiée. Ainsi, les applications logicielles embarquées, qui sont utiles pour la navigation, pour la commande d'équipement embarqués, par exemple des divers capteurs, e.g. caméras optiques ou thermiques, radars etc, sont en nombre restreint, car elles sont coûteuses à développer et à certifier. De plus, les ressources de calcul (e.g. CPU, ROM, RAM) des ordinateurs de bord certifiés sont en général pré-allouées, pour garantir la sécurité et limiter tout risque de piratage ou d'intrusion extérieure. Ainsi, la structure matérielle et logicielle des ordinateurs de bord à fonctionnement certifié est rigide, toute évolution ou modification étant lente et coûteuse.

Cependant, le besoin de ressources de calcul, e.g. processeurs et mémoires, pour des opérations aéronautiques est en constante augmentation, des applications logicielles de plus en plus sophistiquées pouvant être avantageusement mises en oeuvre. De plus, de nouveaux usages se développement avec l'avènement de nouveaux types d'aéronefs allégés, par exemple des drones ou des aéronefs taxis urbains, permettant notamment l'utilisation des capteurs embarqués pour de nouvelles missions de collecte de données, pour des applications de surveillance, de maintenance etc.

Il existe donc un besoin d'augmenter la capacité calculatoire des dispositifs de bord pour permettre d'exécuter des applications logicielles en lien avec ces nouveaux besoins.

Des systèmes de déport des exécutions d'applications logicielles au sol, dans des centres de calcul au sol, ont été proposés. Néanmoins, dans la mesure où des commandes d'équipements embarqués et des récupérations de données fournies par de tels équipements sont nécessaires, le déport des applications au sol n'est pas toujours possible, selon les besoins notamment en termes de bande passante et de latence, et, le cas échéant, en termes de fiabilité/intégrité des calculs et de protection de données.

Il existe un besoin d'exécution d'applications logicielles en lien avec des équipements embarqués dans un aéronef, qui allie l'augmentation des ressources calculatoires disponibles et la fiabilité.

De plus, il est souhaitable de fournir des moyens de supervision de fonctionnement de dispositifs de calcul embarqués.

A cet effet, l'invention propose, selon un aspect, un dispositif de supervision configuré pour communiquer avec un dispositif calcul périphérique embarqué à bord d'un aéronef, ledit dispositif périphérique embarqué étant configuré pour exécuter des applications logicielles en lien avec un ou plusieurs dispositifs électroniques de bord à fonctionnement certifié, le dispositif de supervision comportant une interface homme-machine et étant configuré pour recevoir des signaux d'observabilité dudit dispositif de calcul périphérique, lesdits signaux d'observabilité comprenant des données relatives à des ressources calculatoires locales du dispositif de calcul périphérique embarqué et des informations relatives à l'exécution d'au moins une desdites applications logicielles. Le dispositif de supervision comporte au moins un processeur de calcul configuré pour
- a) calculer un état de fonctionnement dudit dispositif de calcul périphérique et un état d'exécution de ladite au moins une application logicielle à partir des signaux d'observabilité reçus et
- b) afficher ledit état de fonctionnement et ledit état d'exécution sur ladite interface homme machine.

Avantageusement le dispositif de supervision permet à un opérateur de suivre, en temps réel ou en temps décalé, le déroulement d'une mission d'exécution d'une pluralité d'applications logicielles par un aéronef, par exemple à partir d'une base située au sol. Cela permet de détecter des éventuels problèmes de fonctionnement et d'améliorer ou d'appliquer une maintenance prédictive pour le dispositif de calcul périphérique embarqué et/ou les dispositifs électroniques de bord à fonctionnement certifié.

Le dispositif de supervision selon l'invention peut également présenter une ou plusieurs des caractéristiques ci-dessous, prises indépendamment ou selon toutes les combinaisons techniquement envisageables.

Le dispositif de supervision est configuré, pour une mission d'exécution d'une pluralité d'applications logicielles sur une trajectoire de l'aéronef, pour afficher sur l'interface homme machine une pluralité de portions de trajectoire, chaque portion de trajectoire correspondant à un état de fonctionnement du dispositif de calcul périphérique et/ou des dispositifs électroniques de bord.

Le dispositif de supervision est configuré en outre pour afficher une information relative à chaque portion de trajectoire, indiquant ledit état de fonctionnement et une cause racine de l'état de fonctionnement.

La cause racine est reçue du dispositif périphérique embarqué ou déterminée, par calcul, par ledit dispositif de supervision, en fonction desdits signaux d'observabilité et d'informations complémentaires comprenant des informations d'environnement et des informations de connectivité.

Le dispositif de supervision est configuré pour effectuer le calcul a) et l'affichage b) soit sensiblement en temps réel, en réception desdits signaux d'observabilité du dispositif de calcul embarqué, soit postérieurement.

Le dispositif de supervision est configuré pour mettre en oeuvre un jumeau numérique de l'aéronef.

Selon un autre aspect, l'invention concerne un système électronique d'exécution d'applications logicielles comprenant un système de calcul embarqué sur un aéronef, et au moins un système de calcul distant situé au sol, le système de calcul embarqué comportant au moins un dispositif électronique de bord à fonctionnement certifié selon une norme de certification avionique, et un dispositif de calcul périphérique, le système de calcul distant comportant un dispositif de supervision tel que brièvement décrit ci-dessus.

Le système électronique d'exécution d'applications logicielles peut également présenter une ou plusieurs des caractéristiques ci-dessous, prises indépendamment ou selon toutes les combinaisons techniquement envisageables.

Le système est tel que le dispositif de calcul périphérique embarqué, comporte une première interface de communication configurée pour communiquer, selon un premier protocole de communication, avec un ou plusieurs dispositifs électroniques de bord à fonctionnement certifié, une deuxième interface de communication radio, configurée pour communiquer, selon un deuxième protocole de communication radio, avec le système de calcul distant situé au sol, le dispositif de calcul périphérique comportant au moins une unité de mémoire électronique et au moins un processeur de calcul formant des ressources calculatoires locales, le processeur de calcul étant configuré pour implémenter :
- un module de gestion d'une pluralité d'applications logicielles stockées dans ladite mémoire électronique, chaque application logicielle étant adaptée pour fournir au moins un paramètre de commande et/ou recevoir au moins une donnée d'au moins un dispositif électronique de bord à fonctionnement certifié ;
- un module d'activation d'exécution d'au moins une desdites applications logicielles stockées, configuré pour recevoir au moins une requête d'exécution d'au moins une application logicielle d'un dispositif externe de commande et/ou pour valider une condition d'activation d'exécution d'au moins une application logicielle ;
- un module de gestion d'une pile d'exécution, configuré pour déterminer, pour chaque application logicielle à exécuter, d'une allocation de ressources calculatoires locales dudit dispositif de calcul périphérique pour exécuter tout ou partie de ladite application logicielle à exécuter, et pour lancer l'exécution locale de ladite partie de l'application à exécuter et requérir, dans le cas où une première partie de ladite application est exécutée localement, une exécution distante, par le système de calcul distant, d'une deuxième partie de l'application à exécuter, complémentaire de la première partie.

Le dispositif de supervision est configuré pour afficher, suite à la détermination de l'exécution, pour une application logicielle, en deux parties, respectivement une première partie exécutée par le dispositif de calcul périphérique embarqué et une deuxième partie exécutée par le système de calcul distant, d'afficher une information relative auxdites première et deuxième parties.

Le dispositif de supervision est configuré en outre pour afficher une cause racine de la détermination d'exécution en deux parties.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre un système électronique d'exécution d'applications logicielles selon un mode de réalisation ;
[Fig 2] la figure 2 illustre un procédé d'exécution d'applications logicielles selon un premier mode de réalisation ;
[Fig 3] la figure 3 illustre un procédé d'exécution d'applications logicielles selon un deuxième mode de réalisation ;
[Fig 4] la figure 4 est une représentation schématique des principaux blocs fonctionnels d'un dispositif de supervision selon un mode de réalisation ;
[Fig 5] la figure 5 est un exemple d'affichage sur l'interface homme-machine d'un dispositif de supervision de portions de trajectoires relatives à une mission d'exécution d'une pluralité d'applications logicielles par un aéronef.

Le système électronique d'exécution d'applications logicielles, embarqués à bord d'un aéronef, trouve des applications dans tout type d'aéronef, et plus particulièrement pour des aéronefs allégés tels que des drones, embarquant des équipements tels que des capteurs images, de type caméra optique, caméra thermique, radar imageur, des capteurs de positionnement (GNSS, centrales inertielles, capteurs anémo-barométriques, balises de radionavigation, triangulation), des systèmes de mesure comme des télémètres, des capteurs et systèmes de surveillance météo, trafic ou terrain, des systèmes de communication radio ou numériques, des antennes radiofréquence (RF) etc.

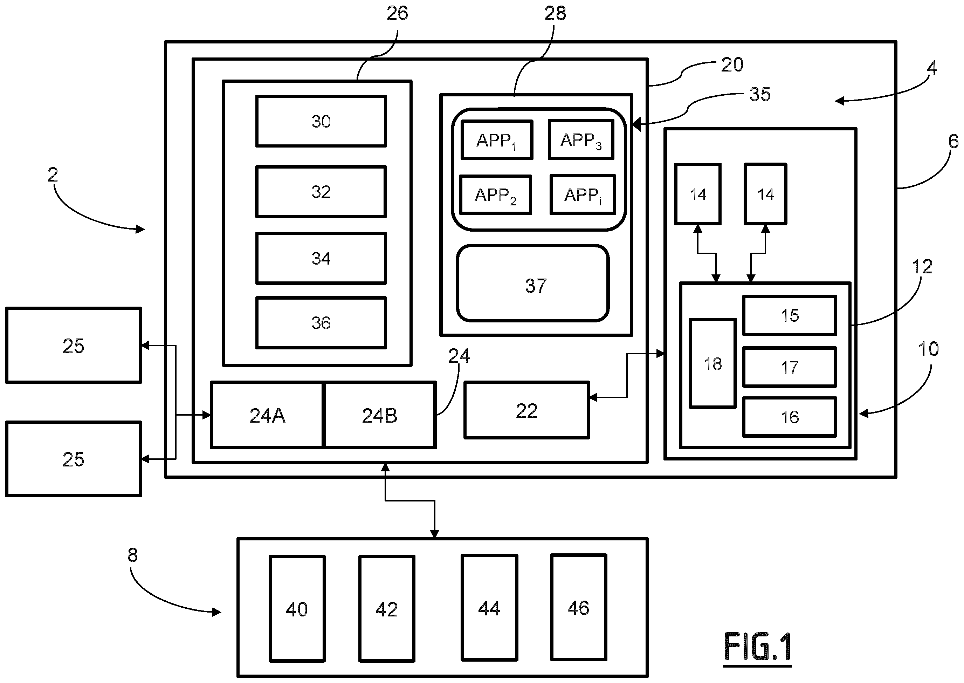

La figure 1 illustre schématiquement un système 2 qui est un système électronique d'exécution logicielles embarquées.

Le système 2 est un système permettant une coopération bord-sol.

Le système 2 comporte d'une part un système de calcul embarqué 4, comportant des dispositifs embarqués à bord d'un aéronef 6, et d'autre part, un ou plusieurs systèmes de calcul au sol 8.

Le système de calcul embarqué 4 comporte un ensemble 10 de dispositifs électroniques de bord à fonctionnement certifié selon une norme de certification avionique, comprenant au moins un ordinateur de bord 12, et des équipements embarqués 14, e.g. des capteurs, par exemple caméras, radars, actionneur, système de navigation, système de pilotage automatique, commandes de vol, système de géolocalisation, des systèmes de surveillance certifiés (Trafic terrain, météo), des systèmes de communication certifiés (e.g. Radios).

Par exemple, les dispositifs de bord à fonctionnement certifié respectent une ou plusieurs des normes suivantes : RTCA DO178B pour le niveau de certification logicielle et RTCA DO160 pour la partie certification matérielle, AEEC Arinc 702A pour le système de gestion de vol (Flight Management System), etc.

Dans un mode de réalisation, l'ordinateur de bord 12 est configuré pour mettre en oeuvre des applications logicielles certifiées, par exemple des applications d'aide à la navigation, de commande de fonctionnement des capteurs 14 et de réception et de traitement de données issues des capteurs 14.

L'ordinateur de bord 12 comporte des ressources matérielles, en particulier une unité de traitement centrale comprenant notamment un ou plusieurs processeurs 15, adaptés pour exécuter des instructions de programme informatique lorsque l'unité de traitement est mise sous tension. L'ordinateur de bord 12 comporte également des unités de stockage d'informations 16, comprenant notamment des unités de mémoire vive (mémoire RAM), des unités de mémoire de type ROM, adaptée à stocker des données et des instructions de code exécutable, une interface de communication 18 et une interface homme-machine 17.

De plus, le système de calcul embarqué 4 comporte avantageusement un dispositif de calcul périphérique embarqué 20.

Ce dispositif de calcul périphérique 20 permet avantageusement d'augmenter la capacité calculatoire embarquée, de manière plus flexible, permettant des mises à jour logicielles et matérielles plus aisées et moins coûteuses que pour l'ordinateur de bord 12.

Le dispositif de calcul périphérique 20 comporte une première interface de communication 22 configurée pour communiquer, selon un premier protocole de communication, avec le ou les dispositifs électroniques de bord à fonctionnement certifié, et notamment avec l'ordinateur de bord 12.

En particulier, la première interface de communication 22 est configurée pour communiquer, selon une communication bidirectionnelle, avec l'interface de communication 18 de l'ordinateur de bord 12.

Par exemple, la communication entre le dispositif de calcul périphérique 20 et l'ordinateur de bord 12 est une communication filaire. En variante, la communication entre le dispositif de calcul périphérique 20 et l'ordinateur de bord 12 est une communication sans fil, par exemple de type Wifi ou Bluetooth.

En outre, le dispositif de calcul périphérique 20 comporte une deuxième interface de communication radio 24, configurée pour communiquer, selon un deuxième protocole de communication radio, avec le ou les systèmes de calcul distant 8 situés au sol.

Le deuxième protocole de communication est un protocole de communication radio, par exemple un protocole standard de téléphonie mobile 4G ou 5G, le protocole de communication par satellite SATCOM, le protocole Datalink AOC/ATC (pour « Aeronautical Operation Control » / « Air Traffic Control »).

Selon des variantes, le dispositif de calcul périphérique 20 comprend plusieurs deuxièmes interfaces de communication radio 24, selon plusieurs protocoles de communication radio, permettant de communiquer avec dispositifs externes, par une deuxième interface de communication radio 24A permettant de communiquer avec le système de calcul 8 et une deuxième interface de communication radio 24B permettant de communiquer selon un autre protocole de communication radio, par exemple avec un ou plusieurs dispositifs externes de commande 25, configurés pour envoyer des commandes de mise en oeuvre d'applications logicielles par le dispositif de calcul périphérique 20 et de recevoir des données, notamment des données issues de capteurs embarqués, en retour.

Un dispositif externe de commande 25 est par exemple une tablette, un ordinateur portable, un téléphone intelligent (ou ordiphone).

Un tel dispositif externe de commande 25 est par exemple également embarqué à bord de l'aéronef.

Dans un mode de réalisation, un tel dispositif externe de commande 25 est opéré par un opérateur embarqué à bord de l'aéronef, par exemple un pilote de l'aéronef, via une interface homme-machine, e.g. un écran tactile ou tout autre type d'interface homme-machine adéquat (non représenté ici).

Ainsi, le dispositif de calcul périphérique 20 est configuré pour communiquer, de manière bidirectionnelle, avec le système de calcul distant 8 et avec au moins un dispositif externe de commande 25.

Le dispositif de calcul périphérique 20 comporte en outre une unité de traitement 26, comportant un ou plusieurs processeurs (CPU ou GPU), et au moins une unité de mémoire électronique 28, ces éléments étant adaptés à communiquer via un bus de communication (non représenté).

Dans l'exemple de la figure 1 seule une unité de traitement 26 et une unité de mémoire électronique 28 sont représentées.

L'unité de mémoire électronique 28 comporte notamment des mémoires de type RAM, ROM, tout type de mémoire non-volatile (par exemple EPROM, EEPROM, FLASH, NVRAM).

L'ensemble des unité(s) de traitement 26 et unité(s) de mémoire électronique 28 forme les ressources calculatoires locales du dispositif de calcul périphérique 20.

De préférence, le dispositif de calcul périphérique 20 est modulaire, plusieurs unités de traitement et de mémoire pouvant être ajoutées, ce qui permet une augmentation dynamique des ressources disponibles, en fonction des besoins.

L'augmentation dynamique des ressources disponibles est limitée, en pratique, dans certains modes de réalisation, par la consommation d'énergie électrique et/ou le poids total d'un tel dispositif de calcul périphérique 20. En effet, le poids total peut être limité pour certains types d'aéronefs, par exemple pour des drones, en fonction de la portance aérodynamique du drone, et/ou de sa manoeuvrabilité. De même, la consommation d'énergie électrique lorsque le dispositif de calcul périphérique exécute des applications logicielles avec une occupation maximale des ressources calculatoires et de stockage 26, 28, est à prendre en compte, afin d'assurer la réalisation d'une mission prévue, sur une durée de mission prévue.

On entend ici par mission un ensemble de tâches à effectuer, par exemple par des capteurs embarqués, en lien avec des indications de vol associées (trajectoires, durées, points de passage etc).

L'unité de mémoire électronique 28 est configurée notamment pour mémoriser une bibliothèque d'applications logicielles 35, comportant un nombre d'applications logicielles APP₁, APP₂... APPᵢ variable.

Chaque application logicielle est mémorisée sous forme de code de programme exécutable. Le terme « application exécutable » est également utilisé pour désigner une telle application logicielle.

Par exemple, les applications logicielles sont obtenues par téléchargement (en anglais « Dataloading »), à partir d'un dispositif externe de commande 25 ou à partir d'un système de calcul au sol 8.

En variante ou en complément, une application logicielle APPᵢ peut être obtenue à partir d'un support lisible par ordinateur, par exemple un médium apte à mémoriser les instructions électroniques et à être couplé à un bus d'un système informatique (e.g. clé USB, mémoire non-volatile (par exemple EPROM, EEPROM, FLASH, NVRAM), une carte magnétique ou une carte optique).

En outre, l'unité de mémoire électronique 28 est également configurée pour mémoriser des données et résultats 37, notamment des données obtenues des dispositifs électroniques de bord à fonctionnement certifié (par exemple, des images obtenues par des capteurs embarqués, des données de fonctionnement, des données relatives à la trajectoire ou aux performances de l'aéronef), et des résultats obtenus par l'exécution des applications logicielles APPᵢ. Ces données et résultats 37 peuvent être transmis au sol en tant que « signaux d'observabilité », permettant à un opérateur humain ou à un système de surveiller le bon fonctionnement du système global, assurer le débogage, et effectuer des simulations ou du rejeu (en anglais « replay ») de mission.

En outre, l'unité de mémoire électronique 28 est configurée pour mémoriser des paramètres utiles pour la mise en oeuvre d'un procédé d'exécution d'applications logicielles tel que décrit ci-après, notamment des paramètres relatifs à l'allocation des ressources calculatoires par application logicielle, le cas échéant, un tableau de priorités d'exécution ou un ensemble de règles statiques définissant des priorités d'exécution d'applications logicielles.

L'unité de traitement 26 est configurée pour exécuter :
- un module 30 de gestion d'une pluralité d'applications logicielles, les applications logicielles étant stockées dans l'unité de mémoire électronique 28, notamment dans une bibliothèque d'applications 35, chaque application logicielle étant adaptée pour fournir au moins un paramètre de commande et/ou recevoir au moins une donnée d'au moins un dispositif électronique de bord à fonctionnement certifié ;
- un module 32 d'activation d'exécution d'au moins une desdites applications logicielles stockées, configuré pour recevoir au moins une requête d'exécution d'au moins une application exécutable d'un dispositif externe de commande et/ou pour valider une condition d'activation d'exécution d'au moins une application logicielle,
- un module 34 de gestion d'une pile d'exécution, configuré pour déterminer, pour chaque application logicielle à exécuter, une allocation de ressources calculatoires locales 26, 28 du dispositif de calcul périphérique 20 pour exécuter tout ou partie de l'application à exécuter, et pour lancer l'exécution locale de ladite partie de l'application à exécuter et requérir, dans le cas où seule une première partie de ladite application est exécutée localement, une exécution distante, par le système de calcul distant 8, d'une deuxième partie de l'application à exécuter, complémentaire de la première partie ;
- un module 36 de gestion de données et résultats, configuré pour consolider et mémoriser les résultats, et communiquer les résultats au dispositif externe de commande et/ou au système de calcul distant.

Les modules 30, 32, 34, 36 sont adaptés à coopérer, comme décrit plus en détail ci-après, pour mettre en oeuvre un procédé d'exécution d'applications logicielles tel que décrit plus en détail ci-après.

Dans un mode de réalisation, les modules 30, 32, 34, 36 sont réalisés sous forme d'instructions logicielles formant un programme d'ordinateur, qui, lorsqu'il est exécuté par un ordinateur, met en oeuvre un procédé d'exécution d'applications logicielles selon l'invention.

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 30, 32, 34, 36 sont réalisés chacun sous forme de composants logiques programmables, tels que des FPGA (de l'anglais *Field Programmable Gate Array*), des microprocesseurs, des composants GPGPU (de l'anglais *General-purposeprocessing on graphies processing*), ou encore de circuits intégrés dédiés, tels que des ASIC (de l'anglais *Application Spécifie Integrated Circuit*).

Le dispositif de calcul périphérique 20 est configuré ainsi pour exécuter localement une première partie des applications à exécuter, et pour déléguer, le cas échéant, une deuxième partie d'exécution au système de calcul distant 8. En effet, dans certains cas de figure, la première partie est égale à 100% de l'application logicielle à exécuter, auquel cas il n'y a pas lieu de déléguer une deuxième partie d'exécution au système de calcul distant.

Dans un mode de réalisation, le système de calcul distant 8 comporte un ou plusieurs dispositifs de calcul électroniques interconnectés.

En variante, le système de calcul distant 8 comporte ou est connecté à un nuage d'ordinateurs ou « cloud » en anglais.

Dans une représentation fonctionnelle, le système de calcul distant 8 comporte une unité de traitement 40, comportant un ou plusieurs processeurs de calcul, une unité de mémoire électronique 42, une interface de communication sol 44, adaptée pour communiquer avec la deuxième interface de communication 24 du dispositif de calcul périphérique embarqué 20, et une interface homme-machine 46.

L'unité de traitement 40 est configurée pour exécuter des parties des applications logicielles APPi, par exécution d'une partie correspondante du code exécutable, mémorisée dans l'unité de mémoire électronique 42, sur requête en provenance du dispositif de calcul périphérique 20, à mémoriser des données et résultats de calcul et à transmettre ces résultats de calcul, via l'interface de communication 44, au dispositif de calcul périphérique 20 et/ou à un dispositif externe de commande 25.

Selon une variante, le système de calcul distant 8 situé au sol est également configuré pour transmettre des données et résultats de calcul à un autre aéronef 6, par exemple dans le cadre d'une mission impliquant une pluralité d'aéronefs.

Avantageusement, une telle gestion de pile d'exécution est dynamique et flexible, et permet de prendre en compte un ou plusieurs critères parmi : un critère de disponibilité des ressources calculatoires, un critère de connectivité, un critère de criticité des données, un critère de priorité, comme expliqué plus en détail ci-après.

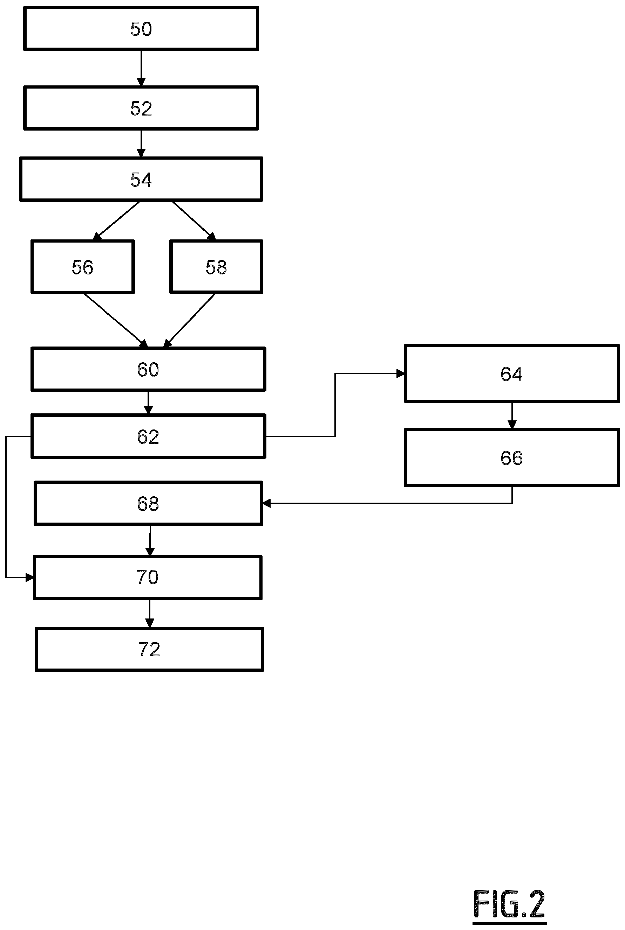

La figure 2 est un synoptique des principales étapes d'un procédé d'exécution d'applications logicielles, mis en oeuvre dans le système électronique 2 d'exécution d'applications logicielles, dans un premier mode de réalisation.

Comme il apparaîtra plus clairement de la description à suivre, le procédé comporte un ensemble d'étapes mises en oeuvre par une unité de traitement, comprenant au moins un processeur, d'un dispositif de calcul périphérique embarqué 20. Ces étapes sont exécutées après mise sous tension du dispositif de calcul périphérique.

Le procédé comporte une étape 50 d'initialisation, qui est une étape préalable, exécutée dans un temps différé par rapport aux autres étapes du procédé.

Lors de l'étape d'initialisation, en particulier, les première et deuxième interfaces de communication sont initialisées, en particulier configurées avec des adresses de communication respectives, de manière à permettre les communications, d'une part avec les dispositifs électroniques de bord 10 à fonctionnement certifié, d'autre part avec les dispositifs externes 25, et avec le système de calcul au sol 8.

Alternativement, le dispositif de calcul périphérique exécute l'initialisation des interfaces de communication suite à une requête, par exemple transmise par un opérateur ou par une application externe par l'intermédiaire d'un dispositif externe de commande 25.

De plus, à l'étape d'initialisation 50, lors de l'initialisation de la première interface de communication avec les équipements de bord, des premières structures de configuration, e.g. de premières tables de configurations sont reçues d'au moins un ordinateur de bord 12, et mémorisées dans une unité de mémoire électronique locale du dispositif de calcul périphérique.

De manière analogue, lors de l'initialisation de la deuxième interface de communication avec le système de calcul distant, des deuxièmes structures de configuration, e.g. de deuxièmes tables de configurations sont reçues d'au moins un système de calcul distant 8, et mémorisées dans une unité de mémoire électronique locale du dispositif de calcul périphérique.

Les premières et deuxièmes structures de configuration contiennent notamment des informations de connectivité (e.g. identifiants et adresses de communication).

Optionnellement, lors de l'étape d'initialisation, la bibliothèque d'applications logicielles APPᵢ est ré-initialisée.

Optionnellement, les données et résultat 37 mémorisés dans l'unité de mémoire du dispositif de calcul périphérique sont effacées lors de l'initialisation 50.

Selon des variantes, les applications APPᵢ et/ou les données et résultats mémorisés lors d'une préalable utilisation du dispositif de calcul périphérique sont conservés.

En outre, lors de la phase d'initialisation, dans un mode de réalisation, des paramètres utiles pour la mise en oeuvre du procédé d'exécution d'applications logicielles sont obtenus et mémorisés. Ces paramètres comportent notamment des paramètres relatifs à l'allocation des ressources par application logicielle, par exemple pour une allocation minimale par application logicielle, une allocation maximale ou une allocation moyenne, et/ou un tableau de priorités d'exécution ou un ensemble de règles statiques définissant des priorités d'exécution d'applications logicielles.

Les paramètres d'allocation de ressources contiennent par exemple : une puissance de calcul, par exemple exprimée en fréquence d'horloge du processeur (par ex en GHz), et/ou une capacité de stockage associée, exprimée par exemple en kilo-octets, et/ou un pourcentage de bande passante de première communication avec les dispositifs électroniques de bord à fonctionnement certifié, et/ou un pourcentage de bande passante de deuxième communication avec le système de calcul distant.

Dans un mode de réalisation, les paramètres d'allocation de ressources sont regroupés sous forme d'un vecteur de paramètres, contenant une valeur pour chacun des paramètres mentionnés ci-dessous :
- P1 : puissance de calcul allouée ;
- P2 : capacité de stockage allouée ;
- P3 : pourcentage de bande passante de première communication ;
- P4 : pourcentage de bande passante de deuxième communication.

Dans des variantes, un vecteur comportant seulement une sous-partie des paramètres d'allocation est défini.

Dans une autre variante, seul l'un des paramètres mentionnés ci-dessus est utilisé.

Le procédé comporte une étape 52 de réception de commande d'ajout/suppression d'application logicielle, en provenance d'un dispositif externe de commande, ou du système de calcul au sol ou d'un des dispositifs de bord.

De préférence, une commande de suppression est reçue d'un dispositif de commande externe ou d'un opérateur autorisé, par exemple propriétaire de l'application logicielle à supprimer.

Par exemple, une authentification d'opérateur autorisé est mise en oeuvre, par un procédé d'authentification, de nombreuses variantes de tels procédés d'authentification étant connues.

Selon un mode de réalisation, l'ajout/la mise à jour d'une application est effectué par un opérateur, de préférence un opérateur autorisé, au moyen d'un support de stockage de données (e.g. clé USB).

Suite à la réception d'une telle commande, le procédé comporte une étape 54 de gestion des applications, qui effectue une mise à jour de la bibliothèque des applications logicielles en fonction des commandes reçues.

L'étape 54 comprend la réception d'une nouvelle application logicielle ou une mise à jour d'une application logicielle préalablement mémorisée, par le moyen d'une liaison filaire ou à télécharger au moyen d'un lien de communication radio, puis la mémorisation des nouvelles applications APPⱼ, et/ou la suppression des applications APPᵢ de la bibliothèque d'applications.

Les applications logicielles mémorisées dans la bibliothèque d'applications 35 sont adaptées pour fournir au moins un paramètre de commande et/ou recevoir au moins une donnée d'au moins un dispositif électronique de bord.

En complément optionnel, suite à la réception d'une nouvelle application logicielle ou d'une mise à jour d'une application logicielle existante, le procédé met en oeuvre des validations d'intégrité et de validité des applications téléchargées, par des méthodes usuelles (authentification, validation de contrôle de redondance cyclique (CRC), etc).

Par la suite, le procédé comporte l'activation d'exécution 56 d'une ou plusieurs des applications logicielles stockées, qui deviennent alors des applications logicielles à exécuter.

En effet, l'exécution parallèle de plusieurs applications logicielles est gérée.

L'activation d'exécution est basée soit sur la réception d'une requête d'exécution d'au moins une application logicielle d'un dispositif externe, soit sur la validation d'une condition d'activation d'exécution.

Dans le cas de la validation d'une condition d'activation d'exécution, l'activation est automatique.

Par exemple, la condition d'activation d'exécution d'une application logicielle APPᵢ est la fin d'exécution d'une application logicielle APPⱼ ou bien correspond à une diminution du besoin en ressource de l'application logicielle Appj compatible avec son fonctionnement.

En outre, des commandes de mise en pause ou d'arrêt d'exécution d'une ou plusieurs applications logicielles peuvent également être reçues (étape 58), leur gestion étant effectuée directement.

L'arrêt d'exécution permet de libérer des ressources et donc de redistribuer les ressources disponibles. De même que pour l'exécution, une validation automatique de condition d'arrêt permet également de déclencher l'arrêt ou la mise en pause de l'exécution d'une application.

Les étapes 54, 56, 58 sont de préférence exécutées en tâche de fond, sensiblement en parallèle, de manière à constamment prendre en compte la réception de nouvelles applications logicielles ou la mise à jour d'applications logicielles existante, ainsi que les activations d'exécution et les commandes d'arrêt ou pause d'exécution.

Le procédé comporte en outre une étape 60 de gestion d'une pile d'exécution des applications logicielles à exécuter. Cette étape est répétée régulièrement, à des intervalles temporels prédéterminés ou sur événement (par exemple demande de démarrage d'une nouvelle application, évènement qui met fin ou modifie significativement les besoins en ressources calculatoires d'une application).

L'étape de gestion 60 met en oeuvre pour chaque application à exécuter APPₖ, une allocation de ressources, en particulier de ressources calculatoires (processeur et mémoire) du dispositif de calcul périphérique, dites ressources locales, pour exécuter tout ou partie de l'application à exécuter APPₖ.

Par exemple, dans un mode de réalisation, une même quantité de ressources locales est allouée à chaque APPₖ, la quantité étant prédéterminée à l'étape d'initialisation 50.

Selon une variante, les ressources sont allouées dynamiquement, par exemple en fonction d'un temps de réponse attendu par application, ce qui permet de définir dynamiquement des priorités d'exécution

Selon une alternative, les l'allocation des ressources est effectuée en fonction de priorités, définies dans un tableau de priorités d'exécution préalablement enregistré ou selon un ensemble de règles statiques préalablement programmé.

Selon une variante, les priorités sont mises à jour dynamiquement au moyen d'un dispositif de commande externe.

Ainsi, le module de gestion met en oeuvre également un critère de priorité.

Pour chaque application logicielle à exécuter APPₖ, en fonction des ressources nécessaires à son exécution, il est possible de déterminer, le cas échéant, une première partie de l'application APP_{k,1} qui est exécutée localement, et une deuxième partie APP_{k,2}, complémentaire de la première partie, à exécuter par le système de calcul distant au sol.

En d'autres termes, des ressources locales et des ressources distantes sont allouées pour l'exécution d'une même application logicielle APPₖ.

Ainsi, un critère de disponibilités de ressources calculatoires est mis en oeuvre pour la détermination de l'exécution locale ou distante de chaque application logicielle.

De plus, la disponibilité d'une bande passante de communication avec le système de calcul au sol est également prise en considération. Ainsi, un critère de connectivité est pris en compte.

En effet, par exemple pour des applications logicielles qui utilisent des données haut débit, par exemple des données vidéo, une bande passante importante est nécessaire pour réaliser un traitement des données par le système de calcul distant situé au sol. De plus, pour un aéronef en déplacement, les conditions de communication selon le deuxième protocole de communication radio peuvent varier en fonction du déplacement, des conditions météorologiques etc.

Considérons par exemple un drone de détection et de cartographie d'obstacles tels que des pylônes électriques, et dont la mission consiste à voler au-dessus d'une zone géographique déterminée, détecter les obstacles de type « pylônes », les caractériser (largeur, hauteur), les géo-référencer (i.e. calculer leur position géographique dans un référentiel donné), et en déduire le maillage de câbles électriques qui les relient.

La détection peut se faire à l'aide de caméras embarquées dans le drone, dont la résolution, la largeur de champ et la cadence de prises de vues aura un impact direct sur le besoin en ressources : Une séquence vidéo en définition/résolution 4K, grand champ, à 50 images/sec demandera par exemple beaucoup plus de ressources de stockage (RAM/ROM) et de ressources de CPU (ou GPU) pour son traitement, qu'une séquence vidéo basse résolution (480p par exemple), ou de largeur de champ plus faible ou à 25 images/sec.

La consommation électrique, et par conséquent l'autonomie du drone, dépendent directement de la sollicitation CPU/RAM/ROM.

Dans le cas d'un calcul distribué entre l'application locale APP_{k,1} , et, l'application à exécuter par le système de calcul distant au sol APP_{k,2}, la consommation électrique du drone sera également fonction de la bande passante de communication entre le bord et le sol, et de la qualité du réseau, qui conditionne les moyens de communication utilisés et la puissance nécessaire pour alimenter les antennes d'émission et de réception.

Si la capacité de calcul (CPU/GPU) et/ou de stockage (RAM/ROM) est suffisante pour traiter une séquence vidéo en 4K (critère 1), et si la consommation électrique est compatible des objectifs de durée de vol du Drone (critère 2), le système pourra choisir de faire effectuer en totalité les calculs de cartographie et de détection et de géo-référencement localement par l'application APP_{k,1}.

Si la capacité de calcul (CPU/GPU) et/ou de stockage (RAM/ROM) est insuffisante pour traiter une séquence vidéo en 4K (critère 1), et si la consommation électrique est compatible des objectifs de durée de vol du drone (critère 2), le système pourra choisir de faire effectuer les calculs de cartographie et de détection et de géo-référencement localement par l'application APP_{k,21} moyennant l'envoi des images prises localement par la caméra au dispositif sol.

Si la capacité de calcul (CPU/GPU) et/ou de stockage (RAM/ROM) est suffisante pour traiter une séquence vidéo en 4K (critère 1), mais que la consommation électrique est incompatible des objectifs de durée de vol du drone (critère 2), le système pourra choisir entre plusieurs solutions :
- Si la consommation électrique est trop élevée du fait du traitement de la totalité des images à bord (CPU/RAM/ROM), mais que la consommation électrique pour envoyer les images au sol n'est pas trop élevée (per exemple dans le cas où le lien de communication est de bonne qualité), le système pourra choisir de faire effectuer une partie des calculs de cartographie et de détection et de géo-référencement localement par l'application APP_{k,1} et une autre partie par l'application APP_{k,2}, moyennant l'envoi d'une partie des images prises localement par la caméra au dispositif sol.
- Si la consommation électrique n'est pas trop élevée du fait du traitement de la totalité des images à bord (CPU/RAM/ROM), mais que la consommation électrique pour envoyer les images au sol est trop élevée (per exemple dans le cas où le lien de communication est de bonne qualité), le système pourra choisir de faire effectuer la totalité des calculs de cartographie et de détection et de géo-référencement localement par l'application APP_{k,1}. Il n'y aura pas d'envoi au sol des images.
- Si la consommation électrique est trop élevée du fait du traitement de la totalité des images à bord (CPU/RAM/ROM), et que la consommation électrique pour envoyer les images au sol est également trop élevée (per exemple dans le cas où le lien de communication est de moins bonne qualité), le système pourra choisir de passer sur une résolution d'images plus faible, ou bien de stocker les images plus longtemps, en attendant de retrouver une bande passante meilleure.
- Si la capacité de calcul (CPU/GPU) et/ou de stockage (RAM/ROM) est insuffisante pour traiter une séquence vidéo en 4K (critère 1), mais que la consommation électrique est compatible des objectifs de durée de vol du drone (critère 2), le système pourra choisir de faire effectuer la totalité des calculs par l'application APP_{k,2}, moyennant l'envoi des images prises localement par la caméra au dispositif sol.
- Enfin si la capacité de calcul (CPU/GPU) et/ou de stockage (RAM/ROM) est insuffisante pour traiter une séquence vidéo en 4K (critère 1), et que la consommation électrique est incompatible des objectifs de durée de vol du drone (critère 2), passer sur une résolution plus faible et réitérer les étapes ci-dessus.
- S'il n'y a aucune solution, même pour une résolution la plus faible possible, le système pourra désactiver l'application APPₖ, et enregistrer un message d'erreur à destination du sol.

Les première et deuxièmes parties à exécuter respectivement en local/ en distant sont par exemple définies en termes de pourcentage de code à exécuter.

Dans certains cas, la première partie est égale à 100% de l'application à exécuter, auquel cas il n'y a pas lieu de déporter une partie de l'exécution au système de calcul au sol.

De préférence, les applications logicielles sont codées de manière à être exécutées par parties.

Dans un mode de réalisation, tout ou partie de chaque application logicielle est préalablement mémorisé également dans la mémoire électronique 42 du système de calcul distant 8, ce qui facilité la délégation de calculs.

Dans un mode de réalisation, un critère de criticité de données est mis en oeuvre pour déterminer la deuxième partie APP_{k,2}, à exécuter au sol, permettant alors d'éviter de transmettre des données ou résultats considérés sensibles ou confidentiels au système de calcul au sol, via la deuxième interface de transmission.

De telles données considérées confidentielles, et donc à protéger, sont par exemple des données relatives aux performances de l'aéronef, ou encore des données confidentielles du client propriétaire de l'application à exécuter (e.g. compagnie aérienne, institution, entreprise).

En particulièrement, cela permet de limiter toute transmission de données associées à une phase de vol ou de mission critique.

Dans le cas où une deuxième partie d'application logicielle est à exécuter par le système de calcul distant, le procédé comporte une requête 62 d'exécution distante, comportant la transmission d'informations associées (e.g. point d'exécution, données à utiliser, résultats intermédiaires).

Dans une variante, en l'absence de stockage préalable dans une unité de mémoire électronique du système de calcul distant, le code exécutable formant la deuxième partie APP_{k,2}, complémentaire de la première partie, à exécuter par le système de calcul distant, est transmise au système de calcul distant lors de l'étape 62.

Le système de calcul distant exécute la deuxième partie APP_{k,2} d'application logicielle (étape 64), et transmet les résultats des calculs au dispositif de calcul périphérique embarqué (étape 66).

Le dispositif de calcul périphérique reçoit les résultats à l'étape 68.

Dans un mode de réalisation, les résultats sont consolidés à l'étape de consolidation 70.

Par exemple, la consolidation comporte la synchronisation temporelle et/ou spatiale des résultats, et/ou une fusion des données, par exemple une fusion des données de capteurs inertiels avec des positions calculées par un traitement logiciel à partir de données de caméras de prise de vue.

Suite à cette étape de consolidation 70, les résultats consolidés sont mémorisés et/ou transmis (étape 72) au dispositif externe de commande, initiateur de l'exécution de l'application logicielle.

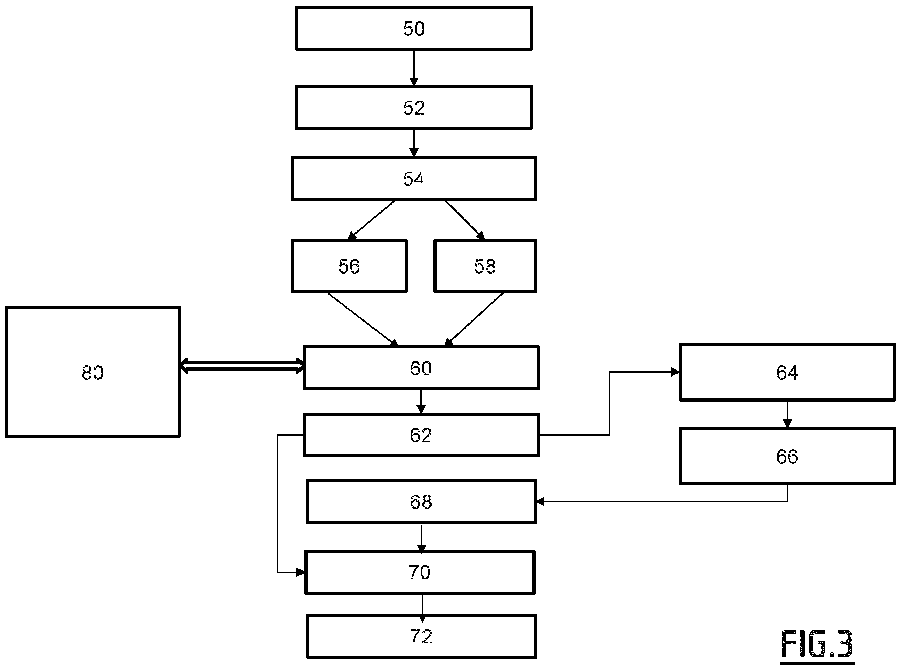

La figure 3 illustre un deuxième mode de réalisation du procédé d'exécution d'applications mis en oeuvre dans le système d'exécution d'applications 2.

Dans ce deuxième mode de réalisation du procédé d'exécution d'applications mis en oeuvre dans le système d'exécution d'applications 2, un dispositif de supervision, qui est soit un des dispositifs de commande externe, soit un dispositif du système de calcul distant au sol, met en oeuvre une supervision en temps réel du fonctionnement du dispositif de calcul périphérique embarqué.

De préférence, le dispositif de supervision fait partie du système de calcul distant au sol et comporte une interface homme machine, permettant l'affichage d'informations à destination d'un opérateur et la réception de commandes de l'opérateur.

Dans ce mode de réalisation, outre l'ensemble des étapes décrites précédemment et qui ne sont pas re-décrites ici, le procédé comporte une supervision 80 mise en oeuvre par le dispositif de supervision.

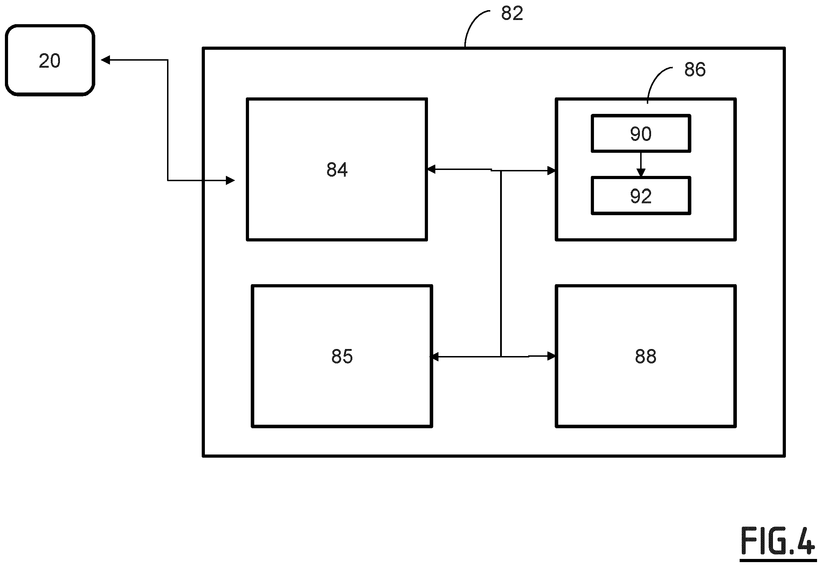

Une représentation schématique d'un dispositif de supervision 82 est fournie dans la figure 4.

Le dispositif de supervision 82 est un dispositif électronique programmable, comportant une interface de communication 84 adaptée pour communiquer avec la deuxième interface de communication 24 du dispositif de calcul périphérique embarqué 20.

Il comporte également une interface homme-machine 85, comportant notamment un ou plusieurs écrans d'affichage, tactile(s) ou non et des moyens (clavier, souris etc), permettant une interaction avec un opérateur.

Le dispositif de supervision 82 comporte également une unité de traitement (e.g. un ou plusieurs processeurs) 86 et une unité de mémoire électronique 88. Les unités 84, 85, 86, 88 sont adaptées pour communiquer via un bus de communication interne.

Le processeur 86 est configuré pour mettre en oeuvre un module 90 de calcul, configuré pour calculer un état de fonctionnement dudit dispositif de calcul périphérique et un état d'exécution de ladite au moins une application logicielle à partir de signaux d'observabilité reçus du dispositif de calcul périphérique 6, et un module 92 d'affichage, sous forme graphique, sur l'interface homme-machine 85, des états de fonctionnement/d'exécution, notamment durant une mission nécessitant l'exécution d'applications logicielles le long d'une trajectoire, ou après l'exécution de la mission.

Les modules 90, 92 sont adaptés à coopérer, comme décrit plus en détail ci-après, pour mettre en oeuvre l'étape 80 de supervision décrite en détail ci-après.

Dans un mode de réalisation, les modules 90, 92 sont réalisés sous forme d'instructions logicielles formant un programme d'ordinateur, qui, lorsqu'il est exécuté par un ordinateur, met en oeuvre le procédé de supervision décrit.

Le programme d'ordinateur comportant des instructions logicielles est en outre apte à être enregistré sur un support non transitoire lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 90, 92 sont réalisés chacun sous forme de composants logiques programmables, tels que des FPGA (de l'anglais *Field Programmable Gate Array*), des microprocesseurs, des composants GPGPU (de l'anglais *General-purposeprocessing on graphies processing*), ou encore de circuits intégrés dédiés, tels que des ASIC (de l'anglais *Application Spécifie Integrated Circuit*).

La supervision 80 est effectuée en continu, le dispositif de supervision comportant une interface homme-machine et étant configuré pour recevoir des signaux d'observabilité du dispositif de calcul périphérique 20.

Dans ce mode de réalisation, des signaux d'observabilité du dispositif de calcul périphérique, envoyés au fur et à mesure, comprennent des données relatives aux ressources calculatoires locales et des informations relatives à l'exécution d'au moins une des applications logicielles. Les signaux d'observabilité incluent notamment les informations relatives à l'utilisation des ressources locales du dispositif de calcul périphérique et de la pile d'applications à exécuter/ en cours d'exécution.

Le dispositif de supervision 82 est configuré pour calculer un état de fonctionnement du dispositif de calcul périphérique et un état d'exécution de la ou de chaque application logicielle à partir des signaux d'observabilité reçus.

Le dispositif de supervision 82 met alors en oeuvre par exemple des affichages sur l'interface homme machine 85, représentatifs de l'état de fonctionnement du dispositif de calcul périphérique (état des ressources locales, connectivité) et l'état d'exécution des applications, avec optionnellement en plus des données et résultat de ces applications. Ces affichages suivent, dans un mode de réalisation, sensiblement en temps réel, le fonctionnement du dispositif de calcul périphérique. Cela permet à un opérateur de définir des priorités d'exécution en temps réel, permettant de prioriser l'exécution de certaines applications logicielles et de mettre en basse priorité ou en pause d'autres applications logicielles, et/ou de modifier les allocations de ressources en temps réel.

Des commandes relatives aux priorités d'exécution des applications logicielles et/ou de modifications de l'allocation de ressources sont alors transmises via le dispositif de supervision au dispositif de calcul périphérique embarqué.

Dans un mode de réalisation, la supervision s'étend à l'ensemble des dispositifs de bord, y compris les dispositifs à fonctionnement certifié, permettant alors une supervision globale de l'utilisation des ressources de bord. En effet, via le dispositif de calcul périphérique embarqué, des données fournies par des capteurs ou dispositifs de bord sont également transmises au dispositif de supervision pour affichage.

En complément, dans l'un ou l'autre des modes de réalisation décrits ci-dessus, il est prévu d'enregistrer, par exemple dans des rapports d'exécution (e.g. fichiers, tableaux) ou toute autre structure de données approprié, dans un format adéquat, un ensemble d'informations d'état et d'exécution du dispositif de calcul périphérique et des dispositifs électroniques de bord à fonctionnement certifié, ainsi que des informations complémentaires comprenant des informations d'environnement et des informations de connectivité, sur la durée complète de la mission de l'aéronef.

Dans un mode de réalisation, l'ensemble d'informations enregistrées dans le ou les rapports comprend les signaux d'observabilité, par ailleurs transmis au dispositif de supervision au fur et à mesure.

Par exemple l'ensemble d'informations comprend l'ensemble des états de la pile d'exécution, et des ressources calculatoires/matérielles du dispositif de calcul périphérique, par exemple les applications logicielles exécutées, la description des ressources calculatoires allouées, les données et résultats, ainsi que des informations complémentaires telles que : la situation météorologique, la disponibilité des interfaces de communication, la bande passante disponible pour les communications avec le système de calcul au sol, des données de fonctionnement interne des systèmes, la consommation en énergie prise par chaque application, et par les autres systèmes de l'aéronef, le profil de vol.

Le ou les rapports d'exécution contenant cet ensemble d'informations sont transmis au dispositif de supervision au sol.

Ces rapports d'exécution sont alors utilisables pour réaliser une phase de rejeu ultérieure, exécutée au sol par le dispositif de supervision. Le dispositif de supervision est configuré pour afficher, en coopération avec des mécanismes de représentation graphique sur l'interface homme-machine 85, un déroulement complet de la mission (rejeu), en particulier des états successifs du dispositif de calcul périphérique et, optionnellement, des dispositifs électroniques de bord, ce qui permet des opérations de maintenance, de débogage (« debug » en anglais). Entre autres, une telle phase de rejeu permet également des recalculer les paramètres fournis à l'étape d'initialisation 50 tels l'allocation minimale, maximale ou moyenne des ressources du dispositif de calcul périphérique.

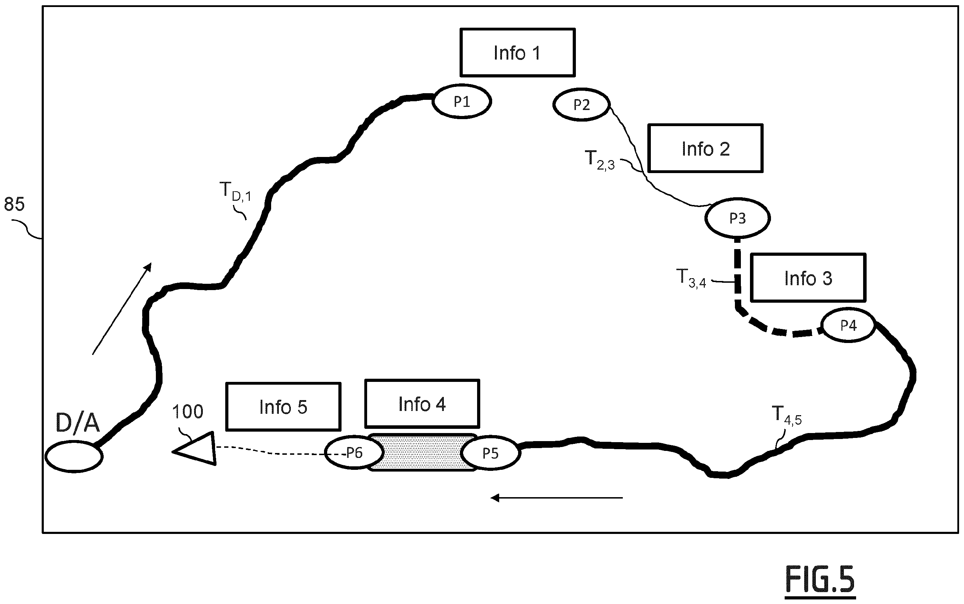

La figure 5 illustre un exemple d'affichage 85 sur une interface homme machine d'un dispositif de supervision, appelée ci-après IHM de supervision, dans le cadre d'une mission effectuée par un drone d'équipé d'un dispositif de calcul périphérique 20 tel que décrit ci-dessus.

L'exemple illustré est basé sur l'exemple de la mission de capture d'images par les capteurs embarqués d'un drone, de détection et de cartographie d'obstacles tels que des pylônes électriques.

Dans cet exemple, la trajectoire effectuée par le drone est illustrée, et découpée en plusieurs portions de trajectoire de fonctionnement différent, ainsi que des informations Info1, ..., Info5 relatives aux états de fonctionnement du dispositif de calcul périphérique, aux états d'exécution des applications logicielles, et optionnellement des informations complémentaires de connectivité et/ou de contexte (e.g. météorologique) pour chaque portion de trajectoire.

La mission se déroule entre un point de départ D et un point d'arrivée A, qui peuvent être confondus. Les échelles sont par exemple en latitude (ordonnée) et longitude (abscisse). L'IHM de supervision permet ainsi de suivre l'évolution de la trajectoire du drone, sur laquelle sont superposées des informations obtenues à partir des autres signaux d'observabilité.

Avantageusement, l'aspect graphique de la trajectoire est un moyen d'illustrer les évènements liés à la mission.

Dans l'exemple illustré, la trajectoire référencée T_{D,1} en trait plein, partant du point de départ D et jusqu'au point P1, correspond à un fonctionnement nominal dans lequel la capture d'images est effectuée entièrement à bord par l'application APP_{k,1}. : le drone vient de démarrer sa mission, ses batteries sont pleines, la connectivité est bonne, la capacité CPU et mémoire de stockage (ressources locales du dispositif périphérique embarqué) sont correctes et permettent donc de prendre et traiter des images de haute résolution à bord.

Entre les points P1 et P2, un « trou » de trajectoire indique que les informations relatives à cette partie de la trajectoire n'ont pas pu être transmises, en l'absence de moyens de communication, par exemple en cas de perte du signal de positionnement satellitaire GNSS. Par exemple, dispositif de calcul périphérique a reçu et enregistré une information de perte du signal de positionnement satellitaire GNSS de la part d'un ou plusieurs dispositifs électroniques de bord à fonctionnement certifié.

De préférence, une information Info1 est affichée, indiquant la raison de l'anomalie constatée, par exemple sous la forme d'un message encadré, indiquant « localisation satellite perdue », et en complément optionnel, une cause racine, par exemple « GNSS Masked », lorsque la cause racine a été déterminée.

La détermination de la cause racine peut être faite :
- soit directement par un ou plusieurs dispositifs électroniques de bord à fonctionnement certifié (par exemple le récepteur GNSS certifié à bord du drone qui constate la réception de moins de 4 satellites, signe d'un masquage),
- soit par le dispositif de calcul périphérique qui dispose par exemple de règles de corrélation, pour corréler un simple message de perte issu d'un des dispositifs électroniques de bord à fonctionnement certifié, avec une base de données de carte d'élévation terrain, et en déduire un masquage de satellites,
- soit par le dispositif de supervision, qui peut disposer également de telles règles de corrélation ou bien disposer d'un jumeau numérique (en anglais « Digital Twin ») du drone, apte à simuler le comportement du Drone dans son environnement synthétique au sol et en déduire également un masquage.

Au point P2, le signal de positionnement satellitaire GNSS est rétabli, par exemple le dispositif de calcul périphérique a reçu et enregistré une information de réception correcte du signal de positionnement satellitaire GNSS de la part d'un ou plusieurs dispositifs électroniques de bord à fonctionnement certifié, et peut donc retransmettre sa position.

Entre les points P2 et P3, une portion de trajectoire référencée T_{2,3} est illustrée en trait fin, indiquant un mode de fonctionnement de partage des calculs entre le dispositif de calcul périphérique embarqué et le système de calcul distant, i.e. l'exécution d'applications logicielles, par exemple de traitement des images numériques, partagée en deux parties APP_{k,1}. et APP_{k,2},, l'une effectuée à bord, l'autre au sol. Par exemple, l'allocation de l'exécution d'une partie au sol est due à l'atteinte d'un seuil d'utilisation de la mémoire vive (RAM) du dispositif de calcul périphérique.

De préférence, une information Info2 relative à l'état du dispositif de calcul périphérique (e.g. « saturation RAM ») et/ou au partage d'exécution entre bord et sol est affichée en lien avec la portion de trajectoire T_{2,3}.

Entre le point P3 et le point P4, la portion de trajectoire référencée T_{3,4} est représentée sous forme de traits pointillés épais, ce qui indique que le dispositif de calcul périphérique est entré dans un mode de calcul dégradé des séquences vidéos, et a par exemple choisi de stocker les séquences à bord plutôt que de les envoyer au sol.

La raison de l'anomalie peut être explicitée sur l'IHM de supervision sous forme d'information Info3, par exemple sous forme textuelle pour indiquer que le calcul est suspendu, et indiquer également la cause racine de ce mode dégradé, par exemple une perte de connexion entre l'interface de communication du dispositif de calcul périphérique embarqué et l'interface de communication du dispositif de calcul distant (e.g. « LTE Lost »). Ce mode correspond au cas où le Drone ne peut effectuer seul les calculs et doit en déléguer une partie à l'extérieur (depuis le point P2), mais ne peut communiquer correctement avec le dispositif de calcul distant.

Entre le point P4 et le point P5, la portion de trajectoire référencée T_{4,5} est représentée en trait plein épais, pour indiquer un retour au mode nominal (identique au mode entre le point de départ D et le point P1).

Entre le point P5 et le point P6, la trajectoire T_{5,6} est grisée par une zone en 2D qui indique une anomalie sur la qualité des images indépendante des moyens de calcul et de communication. De préférence, la raison de l'anomalie (ici une baisse de la qualité des images traitées par l'application APP_{k,1}) est indiquée sous forme d'information Info4, par exemple sous forme textuelle, que la cause racine de cette anomalie : « basse visibilité » (ou « Low Visibility » en anglais). Pour pouvoir déterminer ces informations à afficher, plusieurs solutions sont possibles selon les moyens de calcul à bord et au sol. La détermination peut être réalisée:
- soit directement par un ou plusieurs dispositifs électroniques de bord à fonctionnement certifié (par exemple des capteurs de température et humidité lorsqu'ils sont embarqués, et aptes à déterminer un risque de nébulosité),
- soit par le dispositif de calcul périphérique qui dispose par exemple de règles de corrélation, pour corréler une donnée capteur (température et/ou humidité), avec un modèle de prévision météo embarqué ou reçu par liaison de données, et en déduire que le drone est en train d'évoluer dans une nébulosité,
- soit par le dispositif de supervision qui peut disposer également de telles règles de corrélation ou bien disposer d'un jumeau numérique (Digital Twin) du drone, apte à simuler le comportement du drone dans son environnement synthétique au sol et en déduire également la présence de nébulosités sur la trajectoire suivie par le drone.

Entre le point P6 et la position courante du drone, matérialisée par un indicateur visuel 100 en forme de triangle, un trait fin pointillé indique que la mission du drone (ici de détection et de cartographie d'obstacles) a été interrompue. De préférence, une information associée Info5 est affichée, indiquant par exemple textuellement l'arrêt de la mission, ainsi que la cause racine « commande utilisateur » qui indique qu'un opérateur humain a mis fin manuellement à l'application de prise de vue/détection d'obstacles et cartographie APPₖ.

Grâce au système d'exécution d'applications décrit, les ressources matérielles de bord d'un aéronef (ressources calculatoires, mémoire) sont augmentées de manière dynamique et flexible, et la mise en oeuvre d'applications logicielles clientes est alors possible, tout en assurant la sécurité d'exécution.

Avantageusement, un aéronef embarquant un dispositif de calcul périphérique tel que décrit est utilisable comme moyen mobile de capture de données, à l'instar des satellites.

Avantageusement, la présence d'un dispositif périphérique embarqué permet de réaliser des calculs à algorithmie complexe, qui ne seraient pas réalisables par des dispositifs de bord certifiés du fait des limitations imposées par les certifications.

Avantageusement, la flexibilité introduite par la possibilité de déporter des parties de l'exécution des applications au sol permet de s'adapter aux contraintes de l'aéronef, en particulier les contraintes de poids embarqué et de consommation d'énergie électrique.

Avantageusement, le dispositif de supervision permet un suivi et une supervision, en temps réel ou en temps décalé, ce qui permet l'amélioration de l'implémentation du dispositif de calcul embarqué par retour (« feedback ») de l'opérateur, par exemple le débogage ainsi que la gestion judicieuse des ressources embarquées par intervention d'un opérateur. Avantageusement, des commandes relatives à la mise en oeuvre d'applications logicielles embarquées, judicieusement choisies, sont envoyées alors par le dispositif de supervision au dispositif de calcul périphérique embarqué.

## Revendications

1. Dispositif de supervision configuré pour communiquer avec un dispositif calcul périphérique embarqué à bord d'un aéronef, ledit dispositif périphérique embarqué étant configuré pour exécuter des applications logicielles en lien avec un ou plusieurs dispositifs électroniques de bord (12, 14) à fonctionnement certifié, le dispositif de supervision comportant une interface homme-machine et étant configuré pour recevoir des signaux d'observabilité dudit dispositif de calcul périphérique, lesdits signaux d'observabilité comprenant des données relatives à des ressources calculatoires locales du dispositif de calcul périphérique embarqué et des informations relatives à l'exécution d'au moins une desdites applications logicielles, le dispositif de supervision (82) étant **caractérisé en ce qu'**il comporte au moins un processeur de calcul configuré pour
- a) calculer un état de fonctionnement dudit dispositif de calcul périphérique et un état d'exécution de ladite au moins une application logicielle à partir des signaux d'observabilité reçus et
- b) afficher ledit état de fonctionnement et ledit état d'exécution sur ladite interface homme machine.

2. Dispositif de supervision selon la revendication 1, configuré, pour une mission d'exécution d'une pluralité d'applications logicielles sur une trajectoire de l'aéronef, pour afficher sur l'interface homme machine, une pluralité de portions de trajectoire, chaque portion de trajectoire correspondant à un état de fonctionnement du dispositif de calcul périphérique et/ou des dispositifs électroniques de bord.

3. Dispositif de supervision selon la revendication 2, configuré en outre pour afficher une information relative à chaque portion de trajectoire, indiquant ledit état de fonctionnement et une cause racine de l'état de fonctionnement.

4. Dispositif de supervision selon la revendication 2 dans lequel ladite cause racine est reçue du dispositif périphérique embarqué ou déterminée, par calcul, par ledit dispositif de supervision, en fonction desdits signaux d'observabilité et d'informations complémentaires comprenant des informations d'environnement et des informations de connectivité.

5. Dispositif de supervision selon l'une des revendications 1 à 4, configuré pour effectuer le calcul a) et l'affichage b) soit sensiblement en temps réel, en réception desdits signaux d'observabilité du dispositif de calcul embarqué, soit postérieurement.

6. Dispositif de supervision selon l'une des revendications 1 à 5, configuré pour mettre en oeuvre un jumeau numérique de l'aéronef.

7. Système électronique d'exécution d'applications logicielles comprenant un système de calcul embarqué (4) sur un aéronef (6), et au moins un système de calcul distant (8) situé au sol, le système de calcul embarqué (4) comportant au moins un dispositif électronique de bord (12) à fonctionnement certifié selon une norme de certification avionique, et un dispositif de calcul périphérique (20), le système de calcul distant comportant un dispositif de supervision (82) selon l'une des revendications 1 à 6.

8. Système selon la revendication 7, dans lequel le dispositif de calcul périphérique embarqué, comporte une première interface de communication (22) configurée pour communiquer, selon un premier protocole de communication, avec un ou plusieurs dispositifs électroniques de bord (12, 14) à fonctionnement certifié, une deuxième interface de communication radio (24, 24A, 24B), configurée pour communiquer, selon un deuxième protocole de communication radio, avec le système de calcul distant (8) situé au sol, le dispositif de calcul périphérique comportant au moins une unité de mémoire électronique (28) et au moins un processeur de calcul (26) formant des ressources calculatoires locales, le processeur de calcul (26) est configuré pour implémenter :
- un module (30) de gestion d'une pluralité d'applications logicielles (APP₁, APP₂, APP₃, APPᵢ) stockées dans ladite mémoire électronique (28), chaque application logicielle étant adaptée pour fournir au moins un paramètre de commande et/ou recevoir au moins une donnée d'au moins un dispositif électronique de bord (12, 14) à fonctionnement certifié ;
- un module (32) d'activation d'exécution d'au moins une desdites applications logicielles stockées, configuré pour recevoir au moins une requête d'exécution d'au moins une application logicielle d'un dispositif externe de commande (25) et/ou pour valider une condition d'activation d'exécution d'au moins une application logicielle ;
- un module (34) de gestion d'une pile d'exécution, configuré pour déterminer, pour chaque application logicielle à exécuter, d'une allocation de ressources calculatoires locales dudit dispositif de calcul périphérique pour exécuter tout ou partie de ladite application logicielle à exécuter, et pour lancer l'exécution locale de ladite partie de l'application à exécuter et requérir, dans le cas où une première partie de ladite application est exécutée localement, une exécution distante, par le système de calcul distant (8), d'une deuxième partie de l'application à exécuter, complémentaire de la première partie.

9. Système selon la revendication 8, dans lequel le dispositif de supervision est configuré pour afficher, suite à la détermination de l'exécution, pour une application logicielle, en deux parties, respectivement une première partie exécutée par le dispositif de calcul périphérique embarqué et une deuxième partie exécutée par le système de calcul distant (8), d'afficher une information relative auxdites première et deuxième parties.

10. Système selon la revendication 9, dans lequel le dispositif de supervision est configuré en outre pour afficher une cause racine de la détermination d'exécution en deux parties.
